(19) Europäisches Patentamt
European Patent Office
Office européen des brevets

(11) **EP 2 642 302 B1**

(12) **FASCICULE DE BREVET EUROPEEN**

(45) Date de publication et mention
de la délivrance du brevet:
**06.05.2015   Bulletin 2015/19**

(51) Int Cl.:
***G01P 13/02*** *(2006.01)*   ***G01P 21/00*** *(2006.01)*

(21) Numéro de dépôt: **13159899.7**

(22) Date de dépôt: **19.03.2013**

(54) **Procede et dispositif de verificiation de la coherence des mesures de sonde d incidence pour un aéronef**

Verfahren und Vorrichtung zur Überprüfung der Kohärenz der Messungen des Anstellwinkelgebers für ein Luftfahrzeug

Method and device for verifying the consistency of the measurements of the angle-of-attack probe of an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.03.2012   FR 1252519**

(43) Date de publication de la demande:
**25.09.2013   Bulletin 2013/39**

(73) Titulaire: **Airbus Operations (S.A.S.)**
**31060 Toulouse (FR)**

(72) Inventeurs:
 • **Schott, Grégory**
   **31380 Roqueseriere (FR)**
 • **Joalland, Benoît**
   **31170 Tournefeuille (FR)**
 • **Bourissou, Céline**
   **31830 Plaisance du Touch (FR)**
 • **le Tron, Xavier**
   **31700 Blagnac (FR)**
 • **Ronceray, Didier**
   **31820 Pibrac (FR)**

(74) Mandataire: **Sarraméa, Claude**
**Airbus Operations (SAS)**
**ETRT**
**M0101/1, 316, route de Bayonne**
**31060 Toulouse (FR)**

(56) Documents cités:
**EP-A1- 2 385 378      US-A- 6 073 084**
**US-A1- 2010 100 260**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## DOMAINE TECHNIQUE

L'invention se rapporte à un procédé de vérification de la cohérence des mesures d'une sonde d'incidence d'un aéronef et à un dispositif mettant en oeuvre ce procédé.

## ÉTAT DE LA TECHNIQUE ANTÉRIEURE

Le pilotage de tout aéronef nécessite de connaître sa vitesse relative par rapport à l'air, c'est-à-dire au vent relatif. Cette vitesse est déterminée à l'aide de capteurs de pression statique Ps, de la pression totale Pt, de l'angle d'incidence $\alpha$ et de l'angle de dérapage $\beta$.

On définit communément l'angle d'incidence $\alpha$ d'un aéronef comme étant l'angle du vecteur vitesse de l'air par rapport à un plan horizontal de l'aéronef. De même, on définit l'angle de dérapage $\beta$ d'un aéronef comme étant l'angle du vecteur vitesse de l'air par rapport au plan vertical de l'aéronef.

Par plan vertical de l'aéronef, perpendiculaire au plan horizontal de ce dernier, on entend le plan de symétrie de l'aéronef qui est parallèle à la dérive de l'empennage arrière de l'aéronef.

La valeur de $\alpha$ est traditionnellement mesurée par des sondes d'incidence qui envoient un signal électrique en fonction du temps, indicatif de l'angle d'incidence mesuré localement. Ces sondes sont de type à ailette, dites aussi girouettes, et sont montées généralement sur le nez de l'appareil de sorte à mesurer l'angle du vecteur vitesse de l'air par rapport au plan horizontal de l'aéronef. Elles comportent une partie mobile qui affleure la peau de l'aéronef.

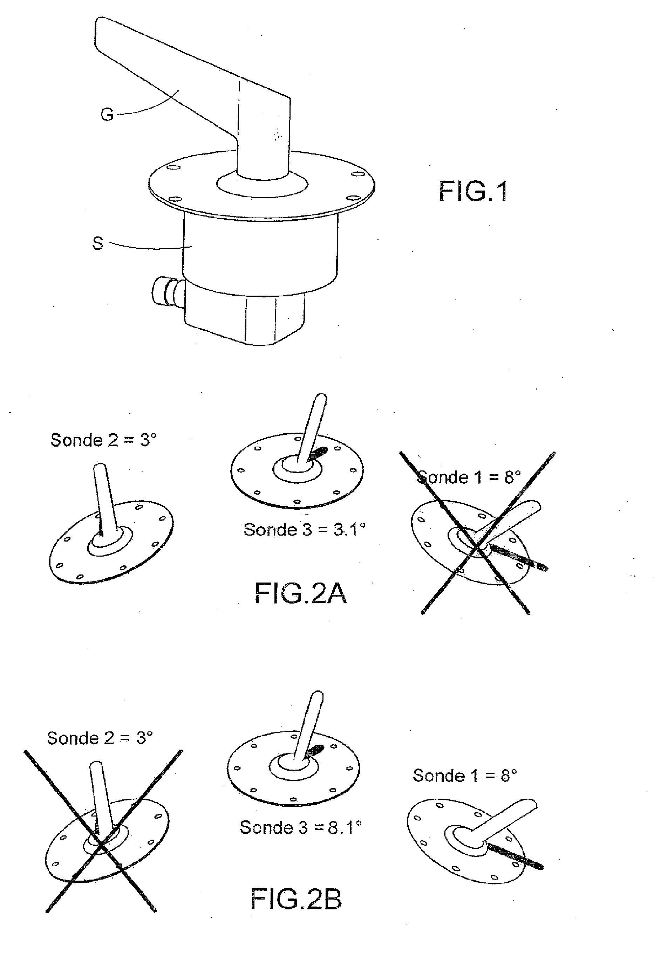

Plus précisément, la figure 1 représente un tel type de sonde à ailette. L'ailette mobile G dépasse du socle S qui est implanté dans le fuselage. On comprend que l'ailette G est une partie sensible de la sonde car elle est soumise à l'environnement extérieur. En effet, une telle sonde est située à des endroits sensibles de l'avion et peut être endommagée par des opérations de maintenance au sol, notamment par l'utilisation d'échelles ou de lances de nettoyage, des conditions météorologiques particulières ou des impacts d'oiseaux en vol. Elle peut donc se bloquer, se tordre ou se casser. On dit alors qu'elle est grippée.

Le principe de mesure de l'angle d'incidence, dit aussi angle d'attaque (abréviation aéronautique AoA) est le suivant : la partie mobile G s'oriente selon la direction du flux d'air local, parallèlement au vent relatif de l'appareil. Une électronique implantée dans le socle S mesure l'angle que fait la partie mobile G avec un angle de référence, et convertit la différence en un signal de mesure de l' angle d'incidence, qui sera noté $S_a$ dans la suite de la description.

Les appareils modernes possèdent plusieurs voies de mesure de l'angle d'incidence, à des fins de redondance des mesures. Chaque voie de mesure comporte une sonde d'incidence distincte. En général trois sondes sont implantées sur le nez de l'appareil où le flux d'air est le moins perturbé par les éléments sustentateurs de l'appareil. L'appareil comporte ainsi trois voies de mesure, généralement implantées chacune dans un module ADR (« Air Data Reference » en anglais) d'une unité ADIRU (« Air Data Inertial Reference Unit » en anglais) de l'appareil.

Un problème se pose dans le cas de panne d'une ou de plusieurs des sondes. En effet, il est difficile de détecter une défaillance due à la déformation de l'ailette G.

Il est connu du brevet EP 1 354 212 B1 de vérifier la cohérence entre trois sondes de mesure par l'application du principe du triplex.

Selon ce principe, il est possible de constater un défaut lorsqu'une des sondes donne un résultat très différent de résultats des deux autres sondes. On en déduit alors que cette sonde est défectueuse.

Le principe du triplex est illustré en figure 2. Dans la figure 2A, les sondes 2 et 3 indiquent une valeur angulaire d'incidence de 3° pour la sonde 2 et de 3,1° pour la sonde 3. La sonde 1 donne quant à elle une valeur de 8° très différente de valeurs des autres sondes. Les mesures de la sonde 1 sont donc rejetées.

Dans d'autres cas, l'application du principe du triplex peut éventuellement s'avérer insuffisante. En effet, lorsque deux sondes donnent des informations erronées mais cohérentes entre elles, la mesure correcte est rejetée. Ce cas est illustré en figure 2B. La sonde 1 donne une valeur de 8° et la sonde 3 donne une valeur de 8,1°. Ces informations sont erronées mais cohérentes entre elles. La sonde 2 donne une valeur de 3°, ce qui est en fait la valeur correcte d'angle d'incidence, mais l'application du principe du triplex fait que ce sont les mesures de cette sonde 2 qui sont rejetées.

Les mesures réalisées par une sonde d'incidence peuvent être utilisées par différents systèmes électroniques équipant un aéronef, comme par exemple le dispositif d'avertissement de décrochage ou le système de commandes de vol électriques.

On comprend alors qu'il est nécessaire de savoir si les informations données par les sondes d'incidence sont correctes, afin d'indiquer au calculateur s'il peut prendre en compte ou non ces informations.

Une première solution consiste à disposer d'un nombre de sondes supérieur à celui nécessaire aux mesures ou bien à installer plusieurs systèmes de sondes supplémentaires de contrôle comme cela est décrit dans le brevet EP 1 354 212. Ces solutions conduisent cependant à des problèmes d'intégration de ces systèmes dans les avions.

Une seconde solution consiste à estimer la valeur de l'incidence et à comparer la valeur estimée à la valeur mesurée pour détecter d'éventuelles erreurs qui peuvent survenir suite à la seule application du principe du triplex. Cette solution est efficace et est généralement employée sur les appareils de conception récente. Pour améliorer encore cette solution, on peut prévoir de la compléter par des moyens de détection de blocage des sondes d'incidence.

Un des objectifs de l'invention est de fournir un système de vérification de la cohérence des sondes d'incidence qui ne nécessite pas l'installation de sondes supplémentaires.

## EXPOSÉ DE L'INVENTION

Cet objectif est atteint par un procédé de vérification de la cohérence des mesures d'une sonde d'incidence montée sur un aéronef, ladite sonde d'incidence fournissant un signal de mesure d'angle d'incidence, dit premier signal, ledit procédé comprenant les étapes successives suivantes :

E1) analyse et mesure de l'amplitude des variations du signal de mesure de facteur de charge vertical, dit second signal, fourni par au moins un accéléromètre monté à bord de l'aéronef ;
E2) comparaison de l'amplitude des variations dudit second signal à un premier seuil, le dépassement dudit premier seuil par l'amplitude des variations dudit second signal déclenchant les étapes successives suivantes durant une fenêtre temporelle de durée limitée :
E3) calcul de l'amplitude des variations dudit premier signal ; et
E4) comparaison de l'amplitude des variations dudit premier signal ainsi calculée avec un second seuil ;
les mesures fournies par ladite sonde d'incidence étant identifiées comme incohérentes si ladite amplitude des variations dudit premier signal ne dépasse pas ledit second seuil durant la durée de ladite fenêtre temporelle.

La valeur dudit second seuil est obtenue par le produit de l'amplitude de la variation dudit second signal et d'un coefficient de proportionnalité entre la variation de l'angle d'incidence et la variation du facteur de charge vertical dudit aéronef, ledit coefficient de proportionnalité étant donné par l'équation suivante :

$$K_{min} = \frac{m.g}{\overline{q}.S.Max(\frac{\partial C_z}{\partial \alpha})}$$

avec $\overline{q} = 0.7.p_s.M^2$ est la pression cinétique

et où m représente la masse de l'aéronef, g la constante de gravité, M le nombre de Mach, $p_s$ la pression statique, S la surface de référence de la voilure, $C_z$ le coefficient de portance de l'aéronef, et $Max\left(\frac{\partial C_z}{\partial \alpha}\right)$ est la valeur maximale du terme $\frac{\partial C_z}{\partial \alpha}$.

Avantageusement, la valeur dudit premier seuil varie selon le point de vol de l'aéronef et correspond à la valeur de l'amplitude du signal de mesure du facteur de charge obtenue pour une variation minimale détectable de l'angle d'incidence lors du point de vol considéré de l'aéronef.

En variante, la valeur dudit premier seuil est fixe et correspond à la valeur de l'amplitude du signal de mesure du facteur de charge obtenue pour une variation minimale détectable de l'angle d'incidence pour un point de vol particulier de l'aéronef.

L'invention se rapporte également à un dispositif de vérification de la cohérence des mesures d'une sonde d'incidence montée sur un aéronef, ladite sonde fournissant un signal de mesure d'angle d'incidence, dit premier signal, ledit dispositif étant **caractérisé en ce qu'il** comprend un premier et un second sous-systèmes pilotés par un microcontrôleur :

- ledit premier sous-système recevant en entrée le signal de mesure de facteur de charge vertical, dit second signal, fourni par au moins un accéléromètre monté à bord de l'aéronef et ledit premier sous-système fournissant audit microcontrôleur un signal booléen indicatif du dépassement d'un premier seuil par une amplitude des variations dudit second signal, ledit microcontrôleur activant ledit second sous-système durant une fenêtre temporelle de durée prédéterminée débutant à partir de l'instant où ledit premier seuil est franchi ;
- ledit second sous-système recevant en entrée ledit premier signal, et fournissant audit microcontrôleur un signal booléen indicatif du dépassement d'un second seuil par l'amplitude des variations dudit premier signal, la valeur dudit second seuil étant fournie audit second sous-système par ledit microcontrôleur, les mesures fournies par ladite

EP 2 642 302 B1

sonde d'incidence étant identifiées comme incohérentes si ladite amplitude des variations dudit premier signal ne dépasse pas ledit second seuil durant la durée de ladite fenêtre temporelle ;

- ledit microcontrôleur fournissant un signal booléen indicatif du dépassement dudit second seuil par ladite amplitude des variations dudit premier signal.

La valeur dudit second seuil est obtenue par le produit de l'amplitude de la variation dudit second signal et d'un coefficient de proportionnalité entre la variation de l'angle d'incidence et la variation du facteur de charge vertical dudit aéronef, ledit coefficient de proportionnalité étant donné par l'équation suivante :

$$K_{min} = \frac{m.g}{\bar{q}.S.Max(\frac{\partial C_z}{\partial \alpha})}$$

avec $\bar{q} = 0.7.p_s.M^2$ est la pression cinétique

et où m représente la masse de l'aéronef, g la constante de gravité, M le nombre de Mach, $p_s$ la pression statique, S la surface de référence de la voilure, $C_z$ le coefficient de portance de l'aéronef, et $Max\left(\frac{\partial C_z}{\partial \alpha}\right)$ est la valeur maximale du terme $\frac{\partial C_z}{\partial \alpha}$.

Avantageusement, la valeur dudit premier seuil varie selon le point de vol de l'aéronef et correspond à la valeur de l'amplitude du signal de mesure du facteur de charge obtenue pour une variation minimale détectable de l'angle d'incidence lors du point de vol considéré de l'aéronef, la valeur dudit premier seuil étant fournie audit premier sous-système par ledit microcontrôleur.

En variante, la valeur dudit premier seuil est fixe et correspond à la valeur de l'amplitude du signal de mesure du facteur de charge obtenue pour une variation minimale détectable de l'angle d'incidence pour un point de vol particulier de l'aéronef.

Les variations dudit second signal sont obtenues par un filtrage passe-bande dudit second signal.

L'amplitude des variations dudit premier signal est obtenue par le calcul de la différence entre le maximum et le minimum des variations dudit premier signal durant la durée de la fenêtre temporelle.

De préférence, le second sous-système est activé avec un retard par rapport à l'instant où ledit premier seuil est franchi.

## BRÈVE DESCRIPTION DES DESSINS

D'autres caractéristiques et avantages de l'invention apparaîtront à la lecture du mode de réalisation préférentiel de l'invention fait en référence aux figures jointes parmi lesquelles :

- La figure 1, déjà décrite, illustre une sonde du type à ailette utilisée dans l'invention ;
- La figure 2, déjà décrite, se compose des figures 2A et 2B. La figure 2A illustre un ensemble de trois sondes où l'une des sondes donne une valeur erronée, très différente de celles fournies par les deux autres sondes. La figure 2B illustre le problème posé par la seule application du principe du triplex dans un ensemble de trois sondes ;
- La figure 3 représente, de façon schématique, les étapes du procédé de détection de blocage d'une sonde d'incidence selon un mode de réalisation de l'invention ;
- La figure 4 illustre le synoptique d'un dispositif mettant en oeuvre le procédé de vérification de la cohérence de la mesure d'une sonde d'incidence selon un mode de réalisation préféré de l'invention.

## EXPOSÉ DÉTAILLÉ DE MODES DE RÉALISATION PARTICULIERS

Les sondes d'incidence utilisées selon l'invention sont du type à ailette (« weather vane »), c'est-à-dire qu'elles comprennent une ailette montée sur un pivot de telle sorte que l'ailette se positionne dans le flux d'air local, parallèlement au vent relatif de l'appareil.

Un exemple d'une telle sonde d'incidence a déjà été décrit en relation avec la figure 1.

L'idée à la base de l'invention est d'exploiter la corrélation physique existant entre l'angle d'incidence $\alpha$ et le facteur de charge vertical d'un aéronef, noté $N_z$, afin de vérifier la cohérence des mesures fournies par une sonde d'incidence, A, montée sur un aéronef, C.

4

A cette fin, l'invention propose de tester la cohérence des mesures d'angle d'incidence α fournies par une sonde d'incidence A, à partir de l'analyse des variations d'une mesure du facteur de charge au centre de gravité de l'aéronef C.

Le dispositif mettant en oeuvre l'invention est conçu pour être simple, efficace et robuste, et pour s'adapter facilement à un système déjà existant de sondes d'incidence.

En effet, le dispositif de mesure du facteur de charge vertical au centre de gravité de l'aéronef $N_z$ est un appareil du type accéléromètre, qui équipe obligatoirement les avions.

De plus, l'accéléromètre est situé à bord de l'appareil, si bien que la mesure qu'il donne est indépendante des conditions extérieures auxquelles l'appareil est soumis. La mesure du facteur de charge vertical est par conséquent une mesure fiable.

La corrélation physique entre l'angle d'incidence et le facteur de charge vertical, s'exprime dans la relation de la portance, à savoir:

$$m.g.N_z = 0.7.p_s.M^2.S.C_z = \bar{q}.S.C_z \qquad (1)$$

avec $\bar{q} = 0.7.p_s.M^2$, et où m représente la masse de l'avion (en kg), g la constante de gravité (en m.s$^{-2}$), $N_z$ le facteur de charge vertical au centre de gravité de l'aéronef (sans dimension), $\bar{q}$ la pression cinétique (en Pa), M le nombre de Mach (sans dimension), $p_s$ la pression statique (en Pa), S est la surface de référence de la voilure (en m$^2$) et enfin $C_z$ est le coefficient de portance de l'avion.

La valeur du coefficient de portance de l'avion $C_z$ dépend notamment de l'angle d'incidence α, d'où la corrélation physique existant entre α et $N_z$.

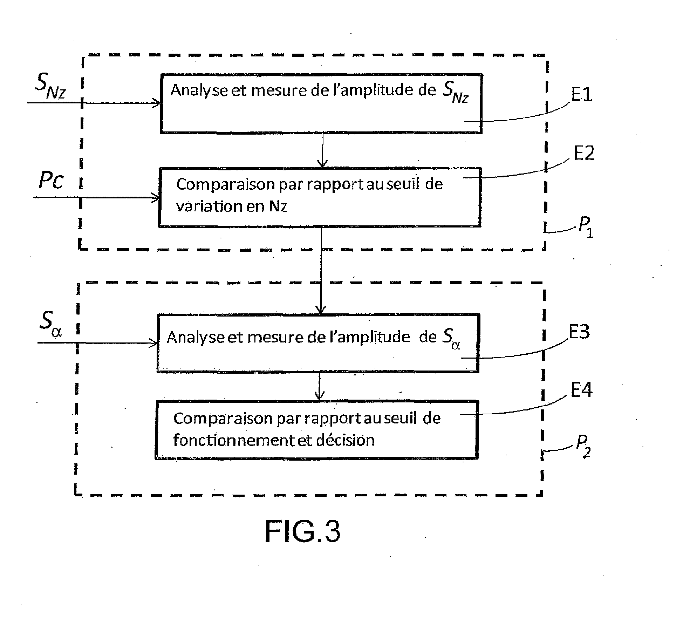

La figure 3 représente, de façon schématique, les étapes du procédé de détection de blocage d'une sonde d'incidence selon l'invention.

Plus précisément, les signaux pris en compte dans le procédé selon l'invention, sont d'une part le signal brut de mesure d'angle d'incidence $S_\alpha$ fourni par la sonde d'incidence et d'autre part le signal de mesure du facteur de charge vertical $S_{Nz}$ donné par un accéléromètre situé à l'intérieur de l'aéronef.

Par signal brut, on entend un signal exempt de toute correction.

Le procédé de vérification de la cohérence de la mesure d'une sonde d'incidence A peut être décomposé en un premier processus $P_1$ et en un second processus. La mise en oeuvre du second processus $P_2$ est limitée dans le temps et est conditionnée au dépassement d'un seuil lors d'une étape du premier processus.

Le premier processus $P_1$ comprend deux étapes, E1 et E2.

La première étape E1 est l'analyse des variations du signal de mesure de facteur de charge vertical $S_{Nz}$ fournit par au moins un accéléromètre.

Au moyen de cette analyse, les variations du signal de mesure de facteur de charge vertical $S_{Nz}$ sont analysées et la valeur de l'amplitude $A_{S_{Nz}}$ de ce signal est mesurée.

Lors d'une seconde étape E2, l'amplitude mesurée est comparée en permanence à un premier seuil, dit seuil en variation de $N_z$, noté $\varepsilon_1$ dans la suite de la description.

De préférence, la valeur du seuil $\varepsilon_1$ varie suivant le point de vol de l'aéronef, noté $Pc$, afin d'adapter la sensibilité de la détection au point de vol de l'aéronef. Cette caractéristique avantageuse sera décrite dans la suite de la description.

En variante, la valeur de ce seuil est fixe et déterminée par simulation de sorte que le procédé de détection est efficace pour tous les points de vol de l'aéronef.

Par point de vol $Pc$ de l'aéronef, on entend le couple vitesse et altitude de celui-ci.

Lorsque l'amplitude des variations du signal de mesure de facteur de charge vertical $S_{Nz}$ dépasse le seuil $\varepsilon_1$, alors le second processus $P_2$ est mis en oeuvre pendant une fenêtre temporelle de durée $T$, et le premier processus $P_1$ est interrompu.

L'amplitude de la variation qui est supérieure au seuil $\varepsilon_1$, est notée $A_{Nz}$ dans la suite de la description. Elle correspond à l'amplitude d'une variation significative du facteur de charge à laquelle est normalement associée une variation significative de l'angle d'incidence au point de vol $Pc$ considéré.

La durée $T$ de la fenêtre temporelle est décomptée à partir de l'instant où le seuil $\varepsilon_1$ est dépassé. Le second processus $P_2$ n'est mis en oeuvre que durant la durée de la fenêtre temporelle ouverte par le dépassement du seuil $\varepsilon_1$.

En effet, on comprend que la mise en oeuvre du second processus est limitée afin de ne relever que les variations d'angle d'incidence α subséquentes à la variation significative du facteur de charge vertical $N_z$ détectée.

Le second processus $P_2$ consiste en la vérification d'une variation de l'angle d'incidence α relative à la variation significative détectée du facteur de charge $N_z$.

La première étape E3 du second processus $P_2$ consiste à analyser les variations du signal de mesure de l'angle d'incidence α pendant la fenêtre de temps $T$ et à mesurer l'amplitude des variations du signal de mesure de l'angle d'incidence.

La seconde étape E4 du second processus comprend la comparaison de l'amplitude calculée à l'étape E3 et avec un second seuil, dit seuil de fonctionnement et noté $\varepsilon_2$ dans la suite de la description.

Le résultat de la comparaison effectuée à l'étape E4 permet d'obtenir une confirmation quant à la cohérence des mesures données par la sonde d'incidence considérée.

En effet, si durant la fenêtre temporelle de durée $T$, l'amplitude de la variation du signal de mesure d'incidence $\mathbf{S}_\alpha$ excède le seuil $\varepsilon_2$, alors les valeurs données par la sonde d'incidence sont cohérentes.

En revanche, si à l'issue de la fenêtre temporelle de durée $T,$ l'amplitude de la variation du signal de mesure d'incidence n'a pas excédé le seuil $\varepsilon_2$, alors la sonde A est défectueuse. Dans ce cas, le signal de mesure $\mathbf{S}_\alpha$ fournit par la sonde A n'est plus exploité par l'électronique de bord de l'appareil.

A l'issue de la fenêtre temporelle $T$, le procédé est réinitialisé. Plus précisément, la cohérence des mesures de la sonde sera vérifiée à nouveau lorsqu'une variation significative du facteur de charge vertical de l'aéronef sera détectée.

Les mesures fournies par une sonde d'incidence jugée défectueuse peuvent aussi être définitivement invalidées durant toute la durée du vol, jusqu'à ce que les équipes de maintenance au sol vérifient le bon fonctionnement de la sonde en question. Dans ce cas, le procédé selon l'invention n'est pas réinitialisé après que la sonde d'incidence a été jugée défectueuse.

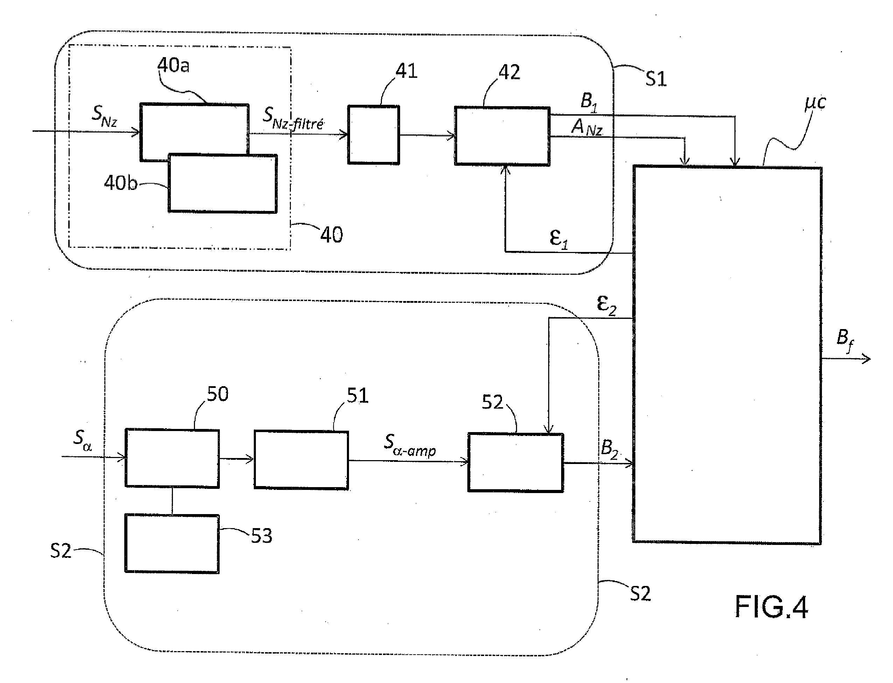

La figure 4 illustre un schéma logique d'un dispositif mettant en oeuvre le procédé de vérification de la cohérence de la mesure d'une sonde d'incidence A selon un mode de réalisation préféré de l'invention.

Le dispositif peut être également décomposé en deux sous-systèmes : un premier sous-système S1 de détection de la variation significative du facteur de charge $\mathbf{N_z}$ qui effectue les étapes du premier processus décrit plus haut, et un second sous-système S2 de vérification de variation de l'angle d'incidence $\alpha$ qui effectue les étapes du second processus décrit plus haut. L'activation du second sous-système S2 est conditionné au déclenchement d'une condition logique au niveau du premier sous-système S1. Enfin, les deux sous-systèmes S1, S2 sont pilotés par un microcontrôleur $\mu c$. Celui-ci de manière classique, comprend un processeur, des mémoires volatile et non-volatile, et des interfaces d'entrée-sortie afin de communiquer avec d'autres éléments électroniques embarqués.

Le premier sous-système S1 reçoit en entrée le signal de mesure du facteur de charge $\mathbf{S_{Nz}}$ de l'aéronef fournit par un accéléromètre. Ce signal est filtré par un filtre passe-bande 40.

Le filtre passe-bande 40 se compose d'un filtre passe-haut 40a et d'un filtre passe-bas 40b.

Le filtre passe-bas 40b est utilisé pour supprimer le bruit du signal de mesure du facteur de charge $\mathbf{S_{Nz}}$, pouvant être dû aux vibrations structurelles.

Le filtre passe-haut 40a permet quant à lui de supprimer la composante continue du signal $\mathbf{S_{Nz}}$, due notamment aux biais de mesure et à des variations directes de la portance de l'appareil. En effet, la portance de l'appareil, corrélée à son facteur de charge comme le montre l'équation (1), peut varier en fonction des différentes configurations aérodynamiques de l'appareil, par exemple lors de la sortie des aérofreins, des volets ou des atterrisseurs.

Ainsi grâce au filtre passe-bande 40, seules les variations du signal $\mathbf{S_{Nz}}$ sont prises en compte dans la suite du procédé. Le signal en sortie du filtre 40 est noté $\mathbf{S_{Nz\text{-}filtré}}$

Avantageusement, un étage d'amplification 41 est disposé en sortie du filtre passe-bande 40 pour ajuster le niveau de signal filtré $\mathbf{S_{Nz\text{-}filtré}}$afin de compenser l'atténuation induite par les filtres 40a et 40b.

En sortie de l'étage d'amplification 41, l'amplitude du signal filtré et amplifié est comparée au seuil $\varepsilon_1$, au moyen du comparateur 42.

Plus précisément, la valeur du seuil $\varepsilon_1$ correspond à la valeur de l'amplitude du signal de mesure du facteur de charge $\mathbf{S_{Nz}}$ obtenue pour une variation minimale détectable de l'angle d'incidence $\alpha$ à un certain point de vol $\mathbf{Pc}$ de l'aéronef.

La valeur du seuil $\varepsilon_1$ est fournie au comparateur 42 par le microcontrôleur $\mu c$. Ce seuil est déterminé à partir de la résolution en détection de la sonde d'incidence A et en fonction des caractéristiques de l'aéronef C.

De préférence, la valeur du seuil $\varepsilon_1$ est variable en fonction du point de vol de l'aéronef. Plus précisément, la mémoire non volatile du microcontrôleur $\mu\mathbf{c}$ comprend une table dans laquelle sont enregistrées les valeurs du seuil $\varepsilon_1$ correspondant à différents points de vol. Le microcontrôleur $\mu\mathbf{c}$ reçoit de l'électronique embarquée, des informations sur le point de vol de l'avion et transmet après lecture de la table, la valeur adéquate du seuil $\varepsilon_1$ au comparateur 42.

La table des différents seuils $\varepsilon_1$ est par exemple, établie par simulation informatique en fonction des caractéristiques de l'appareil considéré. Les simulations peuvent être plus ou moins poussées et prendre par exemple en compte la masse de l'appareil en fonction du carburant embarqué et de sa cargaison.

En variante, la valeur du seuil $\varepsilon_1$ peut être fixe. Dans ce cas, la valeur fixe de $\varepsilon_1$ sera déterminée, par simulation, de telle sorte que le seuil soit adapté à l'ensemble des points de vol de l'appareil.

Le comparateur 42 envoie un signal booléen $\mathbf{B_1}$ au microcontrôleur $\mu c.$ Lorsque l'amplitude des variations du signal de mesure du facteur de charge $\mathbf{S_{Nz}}$ dépasse le seuil $\varepsilon_1$, l'état du signal booléen $\mathbf{B_1}$ passe à 1 en logique positive (ou à 0 en logique négative).

Dans ce cas, le microcontrôleur μ*c* active le second sous-système S2 pendant une fenêtre logique de durée *T*. Dans la suite de la description, on notera $T_0$ le début de la fenêtre temporelle de durée **T,** et $T_f$ sa fin. La durée de la fenêtre logique *T* est de manière classique, comptée par une horloge interne ou externe au microcontrôleur μ*c*.

L'amplitude $A_{N_z}$ de la variation significative du signal de mesure du facteur de charge est enregistrée dans la mémoire volatile du microcontrôleur μ*c*.

La durée *T* est choisie de sorte à détecter une variation de l'angle d'incidence α relative à la variation significative du facteur de charge vertical $N_z$.

Avantageusement, la durée *T* est de l'ordre de 5 à 15 secondes.

Le second sous-système S2 comprend un moyen de détection 50 qui reçoit en entrée le signal brut de mesure de l'angle d'incidence $S_\alpha$ de l'aéronef fourni par la sonde d'incidence A. Il comporte également un moyen de soustraction 51 et un comparateur 52.

Avantageusement, le microcontrôleur μ*c* impose un retard τ réglable (τ < *T*), entre $T_0$ et l'instant où le moyen de détection reçoit le signal brut de mesure de l'angle d'incidence $S_\alpha$ fourni par la sonde d'incidence testée. Le retard τ correspond au temps d'établissement des variations du facteur de charge en réponse à une variation significative de l'incidence.

Entre $T_0 + τ$ et *Tf*, le moyen de détection 50 détecte les maxima et les minima du signal brut de mesure de l'angle d'incidence.

Le moyen de détection est associé à un compteur 53 qui s'incrémente à chaque maximum et chaque minimum détectés dans la période de temps comprise entre $T_0 + τ$ et *Tf*. La valeur du maximum et celle du minimum sont stockées dans une mémoire du microcontrôleur μ*c*, par exemple une mémoire volatile.

A chaque nouvelle incrémentation du compteur 53, le moyen de soustraction 51 soustrait le minimum au maximum afin d'obtenir l'amplitude maximale des variations du signal brut de mesure de l'angle d'incidence $S_\alpha$.

Selon une variante, le microcontrôleur μ*c* peut remplir les fonctions dévolues au moyen de soustraction et au compteur décrits ci-dessus.

Le signal $S_{α\text{-}amp}$ en sortie du moyen de soustraction 51 est envoyé au comparateur 52 dans lequel son amplitude est comparée au seuil $ε_2$.

La valeur du seuil $ε_2$ est fournie au moyen de comparaison 52 par le microcontrôleur μ*c*. La valeur du seuil $ε_2$ est obtenue par le produit de l'amplitude $A_{N_z}$ et d'un coefficient de proportionnalité $K_{min}$ permettant de corréler les variations d'angle d'incidence $∂α$ et les variations du facteur de charge $∂N_z$.

L'obtention de la valeur de $K_{min}$ va maintenant être décrite.

En différenciant l'équation 1 , on obtient l'équation suivante :

$$\frac{∂α}{∂N_z} = \frac{m.g}{\overline{q}.S.\frac{∂C_z}{∂α}} = K \qquad (2)$$

avec

$$K = \frac{m.g}{\overline{q}.S.\frac{∂C_z}{∂α}} \qquad (3)$$

Pour une valeur minimale de K, notée *Min*(**K),** on obtient l'inégalité suivante :

$$∂α \geq K_{min}.∂N_z \qquad (4)$$

A partir de l'équation 4, pour une variation $∂N_z$ donnée du facteur de charge, on peut définir un seuil de variation de l'angle d'incidence $∂α$.

La valeur $K_{min}$ est obtenue lorsque le rapport $\dfrac{∂α}{∂N_z}$ est minimal.

Ce rapport est minimal lorsque $\dfrac{∂C_z}{∂α}$ est maximal, puisque que les autres termes sont déterminés par les spécifications de l'avion. La valeur maximale du terme $\dfrac{∂C_z}{∂α}$ , notée $Max\left(\dfrac{∂C_z}{∂α}\right)$, est obtenue au moyen de simulations informatiques sur tout le domaine de vol de l'aéronef considéré. Un balayage exhaustif du domaine de vol est ainsi réalisé. La valeur de $K_{min}$ est :

$$K_{min} = \frac{m \cdot g}{\overline{q} \cdot S \cdot Max(\frac{\partial C_z}{\partial \alpha})} \qquad (5)$$

La valeur $K_{min}$ ainsi déterminée ne dépend pas des variations de l'angle d'incidence $\partial\alpha$ ni de celles du coefficient de portance de l'aéronef $\partial C_z$. En revanche, la valeur de $K_{min}$ est adaptative en fonction des spécifications de l'aéronef, notamment en fonction de sa masse m. Les différentes valeurs de $K_{min}$, obtenues au moyen de simulations informatiques, sont enregistrées dans la mémoire non volatile du microcontrôleur $\mu c$.

En variante, la valeur de $K_{min}$ peut-être obtenue sans recours à des simulations informatiques, mais en considérant en approximation que $\frac{\partial C_z}{\partial \alpha}$ est constant. Dans ce cas, la valeur de $K_{min}$ est obtenue pour la valeur minimale de la masse m et pour la valeur maximale de la pression cinétique $\overline{q}$ de l'aéronef.

Le comparateur 52 envoie un signal booléen $B_2$ au microcontrôleur $\mu c$ pour indiquer si le seuil $\varepsilon_2$ est dépassé. Lorsque le seuil $\varepsilon_2$ est dépassé, l'état du signal booléen $B_2$ passe à 1 en logique positive (ou à 0 en logique négative).

Enfin, une porte logique ET implémentée dans le microcontrôleur reçoit en entrée le signal booléen $B_2$ issu du comparateur 52, ainsi qu'un signal booléen $B_3$ relatif à l'ouverture de la fenêtre logique $T$. Le signal $B_3$ est fourni par un élément logique du microcontrôleur.

Le signal booléen $B_3$ a un état égal à 1 en logique positive (ou à 0 en logique négative) dans la période de temps comprise entre $T_0 + \tau$ et $Tf$.

La sortie de la porte logique ET est un signal booléen $B_f$ qui est envoyé à l'électronique de bord de l'aéronef, par exemple le calculateur de bord.

Si durant la fenêtre de temps $T$, l'état du signal booléen $B_f$ passe à 1 en logique positive (ou à 0 en logique négative), alors l'électronique de bord de l'appareil considère que la sonde d'incidence fonctionne correctement.

A l'issue de la fenêtre de temps $T$, le procédé de vérification de la sonde d'incidence peut être réinitialisé.

En revanche, si l'état du signal booléen $B_f$ reste égal à 0 en logique positive (ou à 1 en logique négative) pendant la durée d'ouverture de la fenêtre logique de durée $T$, ou si la durée $T$ est écoulée, alors l'électronique de bord de l'appareil considère que la sonde d'incidence est défectueuse.

Le dispositif qui vient d'être décrit, selon un mode de réalisation préféré de réalisation de l'invention, se caractérise par un haut degré d'intégration et une totale indépendance vis-à-vis des circuits de mesures de l'angle d'incidence et de facteur de charge vertical. Par exemple, ce dispositif peut être implémenté en complément des circuits de mesure de l'angle d'incidence d'aéronefs dont les systèmes embarqués doivent être remis à jour, notamment dans le cas de la rénovation (« retrofit ») d'une flotte.

**Revendications**

1.  Procédé de vérification de la cohérence des mesures d'une sonde d'incidence montée sur un aéronef (C), ladite sonde d'incidence (A) fournissant un signal de mesure d'angle d'incidence ($S_\alpha$), dit premier signal, ledit procédé comprenant les étapes successives suivantes :

    E1) analyse et mesure de l'amplitude des variations du signal de mesure de facteur de charge vertical ($S_{Nz}$), dit second signal, fourni par au moins un accéléromètre monté à bord de l'aéronef ;
    E2) comparaison de l'amplitude des variations dudit second signal à un premier seuil ($\varepsilon_1$), le dépassement dudit premier seuil par l'amplitude des variations dudit second signal déclenchant les étapes successives suivantes durant une fenêtre temporelle de durée limitée :
    E3) calcul de l'amplitude des variations dudit premier signal ; et
    E4) comparaison de l'amplitude des variations dudit premier signal ainsi calculée avec un second seuil ($\varepsilon_2$) ;
    les mesures fournies par ladite sonde d'incidence (A) étant identifiées comme incohérentes si ladite amplitude des variations dudit premier signal ne dépasse pas ledit second seuil durant la durée ($T$) de ladite fenêtre temporelle.

2.  Procédé selon la revendication 1, **caractérisé en ce que** la valeur dudit second seuil ($\varepsilon_2$) est obtenue par le produit de l'amplitude ($A_{Nz}$) de la variation dudit second signal et d'un coefficient de proportionnalité ($K_{min}$) entre la variation de l'angle d'incidence ($\alpha$) et la variation du facteur de charge vertical ($N_z$) dudit aéronef (C), ledit coefficient de proportionnalité étant donné par l'équation suivante :

$$K_{min} = \frac{m.g}{\overline{q}.S.Max\left(\frac{\partial C_z}{\partial \alpha}\right)}$$

avec **q = 0.7.$p_s$.M$^2$** est la pression cinétique
et où m représente la masse de l'aéronef, g la constante de gravité, M le nombre de Mach, $p_s$ la pression statique,

S la surface de référence de la voilure, **C$_z$** le coefficient de portance de l'aéronef, et $Max\left(\frac{\partial C_z}{\partial \alpha}\right)$ est la valeur maximale du terme $\frac{\partial C_z}{\partial \alpha}$.

3. Procédé selon la revendication 1 ou 2, **caractérisé en ce que** la valeur dudit premier seuil ($\varepsilon_1$) varie selon le point de vol (**P$_c$**) de l'aéronef et correspond à la valeur de l'amplitude du signal de mesure du facteur de charge (**S$_{Nz}$**) obtenue pour une variation minimale détectable de l'angle d'incidence ($\alpha$) lors du point de vol (**Pc**) considéré de l'aéronef.

4. Procédé selon la revendication 1 ou 2, **caractérisé en ce que** la valeur dudit premier seuil ($\varepsilon_1$) est fixe et correspond à la valeur de l'amplitude du signal de mesure du facteur de charge (**S$_{Nz}$**) obtenue pour une variation minimale détectable de l'angle d'incidence ($\alpha$) pour un point de vol (**Pc**) particulier de l'aéronef.

5. Dispositif de vérification de la cohérence des mesures d'une sonde d'incidence (A) montée sur un aéronef (C), ladite sonde fournissant un signal de mesure d'angle d'incidence (**S$_\alpha$**), dit premier signal, ledit dispositif étant **caractérisé en ce qu'il** comprend un premier (S1) et un second (S2) sous-systèmes pilotés par un microcontrôleur ($\mu$**c**) :

   - ledit premier sous-système (S1) recevant en entrée le signal de mesure de facteur de charge vertical (**S$_{Nz}$**), dit second signal, fourni par au moins un accéléromètre monté à bord de l'aéronef et ledit premier sous-système fournissant audit microcontrôleur un signal booléen (**B$_1$**) indicatif du dépassement d'un premier seuil ($\varepsilon_1$) par une amplitude de variations dudit second signal, ledit microcontrôleur activant ledit second sous-système (S2) durant une fenêtre temporelle de durée (**T**) prédéterminée débutant à partir de l'instant (**T$_0$**) où ledit premier seuil est franchi ;
   - ledit second sous-système (S2) recevant en entrée ledit premier signal, et fournissant audit microcontrôleur un signal booléen indicatif (**B$_2$**) du dépassement d'un second seuil ($\varepsilon_2$) par l'amplitude des variations dudit premier signal, la valeur dudit second seuil étant fournie audit second sous-système par ledit microcontrôleur, les mesures fournies par ladite sonde d'incidence (A) étant identifiées comme incohérentes si ladite amplitude des variations dudit premier signal ne dépasse pas ledit second seuil durant la durée (**T**) de ladite fenêtre temporelle ;
   - ledit microcontrôleur fournissant un signal booléen (**B$_f$**) indicatif du dépassement dudit second seuil par ladite amplitude des variations dudit premier signal.

6. Dispositif selon la revendication 5, **caractérisé en ce que** la valeur dudit second seuil ($\varepsilon_2$) est obtenue par le produit de l'amplitude (**A$_{Nz}$**) de la variation dudit second signal et d'un coefficient de proportionnalité (**K$_{min}$**) entre la variation de l'angle d'incidence ($\alpha$) et la variation du facteur de charge vertical (**N$_z$**) dudit aéronef (C), ledit coefficient de proportionnalité étant donné par l'équation suivante :

$$K_{min} = \frac{m.g}{\overline{q}.S.Max\left(\frac{\partial C_z}{\partial \alpha}\right)}$$

avec q = 0.7.p$_s$. M$^2$ est la pression cinétique
et où m représente la masse de l'aéronef, g la constante de gravité, M le nombre de Mach, **p$_s$** la pression statique,

S la surface de référence de la voilure, **C$_z$** le coefficient de portance de l'aéronef, et $Max\left(\frac{\partial C_z}{\partial \alpha}\right)$ est la valeur maximale du terme $\frac{\partial C_z}{\partial \alpha}$.

7. Dispositif selon la revendication 5 ou 6, **caractérisé en ce que** la valeur dudit premier seuil ($\varepsilon_1$) varie selon le point de vol **(Pc)** de l'aéronef et correspond à la valeur de l'amplitude du signal de mesure du facteur de charge **(S$_{Nz}$)** obtenue pour une variation minimale détectable de l'angle d'incidence ($\alpha$) lors du point de vol **(Pc)** considéré de l'aéronef, la valeur dudit premier seuil étant fournie audit premier sous-système par ledit microcontrôleur.

8. Dispositif selon la revendication 5 ou 6, **caractérisé en ce que** la valeur dudit premier seuil ($\varepsilon_1$) est fixe et correspond à la valeur de l'amplitude du signal de mesure du facteur de charge **(S$_{Nz}$)** obtenue pour une variation minimale détectable de l'angle d'incidence ($\alpha$) pour un point de vol (*Pc*) particulier de l'aéronef.

9. Dispositif selon l'une quelconque des revendications 5 à 8, **caractérisé en ce que** les variations dudit second signal sont obtenues par un filtrage passe-bande (40) dudit second signal.

10. Dispositif selon l'une quelconque des revendications 5 à 9, **caractérisé en ce que** l'amplitude des variations dudit premier signal est obtenue par le calcul de la différence entre le maximum et le minimum des variations dudit premier signal durant la durée (*T*) de la fenêtre temporelle.

11. Dispositif selon l'une quelconque des revendications 5 à 10, **caractérisé en ce que** le second sous-système (S2) est activé avec un retard ($\tau$) par rapport à l'instant **(T$_0$)** où ledit premier seuil est franchi.

**Patentansprüche**

1. Verfahren zur Überprüfung der Kohärenz der Messungen eines Anstellwinkelgebers, der auf einem Luftfahrzeug (C) angebracht ist, wobei der Anstellwinkelgeber (A) ein Anstellwinkel-Messsignal (S$_a$) liefert, das erstes Signal genannt wird, wobei das Verfahren die folgenden aufeinanderfolgenden Schritte aufweist:

   E1) Analyse und Messung der Amplitude der Schwankungen des Messsignals des vertikalen Lastfaktors (S$_{Nz}$), das zweites Signal genannt wird, das durch mindestens einen Beschleunigungsmesser geliefert wird, der an Bord des Luftfahrzeugs angebracht ist;
   E2) Vergleich der Amplitude der Schwankungen des zweiten Signals mit einem ersten Schwellenwert ($\varepsilon_1$), wobei die Überschreitung des ersten Schwellenwerts durch die Amplitude der Schwankungen des zweiten Signals die folgenden aufeinanderfolgenden Schritte während eines Zeitfensters von begrenzter Dauer auslöst:
   E3) Berechnung der Amplitude der Schwankungen des ersten Signals; und
   E4) Vergleich der so berechneten Amplitude der Schwankungen des ersten Signals mit einem zweiten Schwellenwert ($\varepsilon_2$);
   wobei die Messungen, die durch den Anstellwinkelgeber (A) geliefert werden, als inkohärent identifiziert werden, wenn die Amplitude der Schwankungen des ersten Signals den zweiten Schwellenwert während der Dauer (T) des Zeitfensters nicht überschreitet.

2. Verfahren nach Anspruch 1, **dadurch gekennzeichnet, dass** der Wert des zweiten Schwellenwerts ($\varepsilon_2$) durch das Produkt der Amplitude (A$_{NZ}$) der Schwankung des **zweiten Signals und eines** Proportionalitätskoeffizienten (*K$_{min}$*) zwischen der Schwankung des Anstellwinkels ($\alpha$) und der Schwankung des vertikalen Lastfaktors (*N$_Z$*) des Luftfahrzeugs (C) erhalten wird, wobei der Proportionalitätskoeffizient durch die folgende Gleichung gegeben ist:

$$K_{min} = \frac{m.g}{\bar{q}.S.Max\left(\frac{\partial C_z}{\partial \alpha}\right)}$$

wobei $\bar{q}=0.7.p_s.M^2$ der kinetische Druck ist
und wo m die Masse des Luftfahrzeugs darstellt, g die Gravitationskonstante, M die Machzahl, $p_s$ der statische

Druck, S die Bezugsfläche des Tragwerks, $C_Z$ der Auftriebskoeffizient des Luftfahrzeugs und $\overset{\approx}{Max}(\frac{\partial C_z}{\partial \alpha})$ der

Maximalwert des Terms $\frac{\partial C_z}{\partial \alpha}$ ist.

3. Verfahren nach Anspruch 1 oder 2, **dadurch gekennzeichnet, dass** der Wert des ersten Schwellenwerts ($\varepsilon_1$) sich je nach Flugpunkt ($P_c$) des Luftfahrzeugs ändert und dem Wert der Amplitude des Messsignals des Lastfaktors ($S_{NZ}$) entspricht, der für eine ermittelbare minimale Schwankung des Anstellwinkels ($\alpha$) beim betrachteten Flugpunkt ($P_c$) des Luftfahrzeugs erhalten wird.

4. Verfahren nach Anspruch 1 oder 2, **dadurch gekennzeichnet, dass** der Wert des ersten Schwellenwerts ($\varepsilon_1$) fest ist und dem Wert der Amplitude des Messsignals des Lastfaktors ($\boldsymbol{S_{NZ}}$) entspricht, der für eine ermittelbare minimale Schwankung des Anstellwinkels ($\alpha$) für einen bestimmten Flugpunkt ($\boldsymbol{P_c}$) des Luftfahrzeugs erhalten wird.

5. Vorrichtung zur Überprüfung der Kohärenz von Messungen eines Anstellwinkelgebers (A), der auf einem Luftfahrzeug (C) angebracht ist, wobei der Geber ein Anstellwinkel-Messsignal ($S_\alpha$) liefert, das erstes Signal genannt wird, wobei die Vorrichtung **dadurch gekennzeichnet ist, dass** sie ein erstes (S1) und ein zweites (S2) Teilsystem aufweist, die durch einen Mikrocontroller ($\mu$c) gesteuert werden:

   - wobei das erste Teilsystem (S1) als Eingang das Messsignal des vertikalen Lastfaktors ($\boldsymbol{S_{NZ}}$) empfängt, das zweites Signal genannt wird, das durch mindestens einen Beschleunigungsmesser geliefert wird, der an Bord des Luftfahrzeugs angebracht ist, und das erste Teilsystem dem Mikrocontroller ein boolesches Signal ($\boldsymbol{B_1}$) liefert, das die Überschreitung eines ersten Schwellenwerts ($\varepsilon_1$) durch eine Amplitude von Schwankungen des zweiten Signals angibt, wobei der Mikrocontroller das zweite Teilsystem (S2) während eines Zeitfensters mit einer vorbestimmten Dauer (T) aktiviert, die ab dem Zeitpunkt ($T_0$) beginnt, an dem der erste Schwellenwert überschritten wird;
   - das zweite Teilsystem (S2) als Eingang das erste Signal empfängt und dem Mikrocontroller ein boolesches Signal ($\boldsymbol{B_2}$) liefert, das die Überschreitung eines zweiten Schwellenwerts ($\varepsilon_2$) durch die Amplitude der Schwankungen des ersten Signals angibt, wobei der Wert des zweiten Schwellenwerts dem zweiten Teilsystem durch den Mikrocontroller geliefert wird, wobei die Messungen, die durch den Anstellwinkelgeber (A) geliefert werden, als inkohärent identifiziert werden, wenn die Amplitude der Schwankungen des ersten Signals das zweite Signal nicht während der Dauer ($T$) des Zeitfensters überschreitet;
   - wobei der Mikrocontroller ein boolesches Signal ($\boldsymbol{B_f}$) liefert, das die Überschreitung des zweiten Schwellenwerts durch die Amplitude der Schwankungen des ersten Signals angibt.

6. Vorrichtung nach Anspruch 5, **dadurch gekennzeichnet, dass** der Wert des zweiten Schwellenwerts ($\varepsilon_2$) durch das Produkt der Amplitude ($\boldsymbol{A_{NZ}}$) der Schwankung des zweiten Signals und eines Proportionalitätskoeffizienten ($\boldsymbol{K_{min}}$) zwischen der Schwankung des Anstellwinkels ($\alpha$) und der Schwankung des vertikalen Lastfaktors ($\boldsymbol{N_Z}$) des Luftfahrzeugs (C) erhalten wird, wobei der Proportionalitätskoeffizient durch die folgende Gleichung gegeben ist:

$$K_{min} = \frac{m.g}{\bar{q}.S.Max(\frac{\partial C_z}{\partial \alpha})}$$

wobei $\bar{q}=0.7.ps.M^2$ der kinetische Druck ist
und wo m die Masse des Luftfahrzeugs darstellt, g die Gravitationskonstante, M die Machzahl, $\boldsymbol{p_s}$ der statische

Druck, S die Bezugsfläche des Tragwerks, $\boldsymbol{C_z}$ der Auftriebskoeffizient des Luftfahrzeugs und $\overset{\approx}{Max}(\frac{\partial C_z}{\partial \alpha})$ der

Maximalwert des Terms $\frac{\partial C_z}{\partial \alpha}$ ist.

7. Vorrichtung nach Anspruch 5 oder 6, **dadurch gekennzeichnet, dass** der Wert des ersten Schwellenwerts ($\varepsilon_1$) sich je nach Flugpunkt ($\boldsymbol{P_c}$) des Luftfahrzeugs ändert und dem Wert der Amplitude des Messsignals des Lastfaktors ($\boldsymbol{S_{NZ}}$) entspricht, der für eine ermittelbare minimale Schwankung des Anstellwinkels ($\alpha$) beim betrachteten Flugpunkt

(**P_c**) des Luftfahrzeugs erhalten wird, wobei der Wert des ersten Schwellenwerts dem ersten Teilsystem durch den Mikrocontroller geliefert wird.

8. Vorrichtung nach Anspruch 5 oder 6, **dadurch gekennzeichnet, dass** der Wert des ersten Schwellenwerts ($\varepsilon_1$) fest ist und dem Wert der Amplitude des Messsignals des Lastfaktors (**S_NZ**) entspricht, der für eine ermittelbare minimale Schwankung des Anstellwinkels ($\alpha$) für einen bestimmten Flugpunkt (**P_c**) des Luftfahrzeugs erhalten wird.

9. Vorrichtung nach einem der Ansprüche 5 bis 8, **dadurch gekennzeichnet, dass** die Schwankungen des zweiten Signals durch ein Bandpassfiltern (40) des zweiten Signals erhalten werden.

10. Vorrichtung nach einem der Ansprüche 5 bis 9, **dadurch gekennzeichnet, dass** die Amplitude der Schwankungen des ersten Signals durch die Berechnung der Differenz zwischen dem Maximum und dem Minimum der Schwankungen des ersten Signals während der Dauer (*T*) des Zeitfensters erhalten wird.

11. Vorrichtung nach einem der Ansprüche 5 bis 10, **dadurch gekennzeichnet, dass** das zweite Teilsystem (S2) mit einer Verzögerung ($\tau$) in Bezug zum Zeitpunkt (*T_0*) aktiviert wird, an dem der erste Schwellenwert überschritten wird.

**Claims**

1. Method for verifying the consistency of the measurements of an incidence probe mounted on an aircraft (C), the said incidence probe (A) providing an angle of incidence measurement signal ($S_\alpha$), termed the first signal, the said method comprising the following successive steps:

   E1) analysis and measurement of the amplitude of the variations of the vertical load factor measurement signal ($S_{Nz}$), termed the second signal, provided by at least one accelerometer mounted aboard the aircraft;
   E2) comparison of the amplitude of the variations of the said second signal with a first threshold ($\varepsilon_1$), the exceeding of the said first threshold by the amplitude of the variations of the said second signal triggering the following successive steps during a time window of limited duration:

   E3) computation of the amplitude of the variations of the said first signal; and
   E4) comparison of the thus computed amplitude of the variations of the said first signal with a second threshold ($\varepsilon_2$);
   the measurements provided by the said incidence probe (A) being identified as inconsistent if the said amplitude of the variations of the said first signal does not exceed the said second threshold during the duration (T) of the said time window.

2. Method according to Claim 1, **characterized in that** the value of the said second threshold ($\varepsilon_2$) is obtained by the product of the amplitude ($A_{Nz}$) of the variation of the said second signal and of a coefficient of proportionality ($K_{min}$) between the variation of the angle of incidence ($\alpha$) and the variation of the vertical load factor ($N_z$) of the said aircraft (C), the said proportionality coefficient being given by the following equation:

$$K_{min} = \frac{m.g}{\overline{q}.S.Max\left(\dfrac{\delta C_z}{\delta \alpha}\right)}$$

with $\overline{q} = 0.7.p_s.M^2$ is the kinetic pressure
and where m represents the mass of the aircraft, g the gravity constant, M the Mach number, $p_s$ the static pressure,

S the reference area of the aerofoil, $C_z$ the lift coefficient of the aircraft, and max $\left(\dfrac{\delta C_z}{\delta \alpha}\right)$ is the maximum value of the term $\left(\dfrac{\delta C_z}{\delta \alpha}\right)$.

3. Method according to Claim 1 or 2, **characterized in that** the value of the said first threshold ($\varepsilon_1$) varies according to the flight point (Pc) of the aircraft and corresponds to the value of the load factor measurement signal ($S_{Nz}$) amplitude obtained for a detectable minimum variation of the angle of incidence ($\alpha$) at the flight point (Pc) considered of the aircraft.

4. Method according to Claim 1 or 2, **characterized in that** the value of the said first threshold ($\varepsilon_1$) is fixed and corresponds to the value of the load factor measurement signal ($S_{Nz}$) amplitude obtained for a detectable minimum variation of the angle of incidence ($\alpha$) for a particular flight point (Pc) of the aircraft.

5. Device for verifying the consistency of the measurements of an incidence probe (A) mounted on an aircraft (C), the said probe providing an angle of incidence measurement signal ($S_\alpha$), termed the first signal, the said device being **characterized in that** it comprises a first (S1) and a second (S2) sub-systems driven by a microcontroller ($\mu$c):

   - the said first sub-system (S1) receiving as input the vertical load factor measurement signal ($S_{Nz}$), termed the second signal, provided by at least one accelerometer mounted aboard the aircraft and the said first sub-system providing the said microcontroller with a boolean signal ($B_1$) indicative of the exceeding of a first threshold ($\varepsilon_1$) by an amplitude of variations of the said second signal, the said microcontroller activating the said second sub-system (S2) during a time window of predetermined duration (T) starting from the instant ($T_0$) at which the said first threshold is crossed;
   - the said second sub-system (S2) receiving as input the said first signal, and providing the said microcontroller with a boolean signal ($B_2$) indicative of the exceeding of a second threshold ($\varepsilon_2$) by the amplitude of the variations of the said first signal, the value of the said second threshold being provided to the said second sub-system by the said microcontroller, the measurements provided by the said incidence probe (A) being identified as inconsistent if the said amplitude of the variations of the said first signal does not exceed the said second threshold during the duration (T) of the said time window;
   - the said microcontroller providing a boolean signal ($B_f$) indicative of the exceeding of the said second threshold by the said amplitude of the variations of the said first signal.

6. Device according to Claim 5, **characterized in that** the value of the said second threshold ($\varepsilon_2$) is obtained by the product of the amplitude ($A_{Nz}$) of the variation of the said second signal and of a coefficient of proportionality ($K_{min}$) between the variation of the angle of incidence ($\alpha$) and the variation of the vertical load factor ($N_z$) of the said aircraft (C), the said proportionality coefficient being given by the following equation:

$$K_{min} = \frac{m.g}{\overline{q}.S.Max\left(\dfrac{\delta C_z}{\delta\alpha}\right)}$$

with $\overline{q} = 0.7.p_s.M^2$ is the kinetic pressure
and where m represents the mass of the aircraft, g the gravity constant, M the Mach number, $p_s$ the static pressure,

S the reference area of the aerofoil, $C_z$ the lift coefficient of the aircraft, and $\max\left(\dfrac{\delta C_z}{\delta\alpha}\right)$ is the maximum value of the term $\left(\dfrac{\delta C_z}{\delta\alpha}\right)$.

7. Device according to Claim 5 or 6, **characterized in that** the value of the said first threshold ($\varepsilon_1$) varies according to the flight point (Pc) of the aircraft and corresponds to the value of the load factor measurement signal ($S_{Nz}$) amplitude obtained for a detectable minimum variation of the angle of incidence ($\alpha$) at the flight point (Pc) considered of the aircraft, the value of the said first threshold being provided to the said first sub-system by the said microcontroller.

8. Device according to Claim 5 or 6, **characterized in that** the value of the said first threshold ($\varepsilon_1$) is fixed and corresponds to the value of the load factor measurement signal ($S_{Nz}$) amplitude obtained for a detectable minimum variation of the angle of incidence ($\alpha$) for a particular flight point (Pc) of the aircraft.

9. Device according to any one of Claims 5 to 8, **characterized in that** the variations of the said second signal are obtained by a bandpass filtering (40) of the said second signal.

10. Device according to any one of Claims 5 to 9, **characterized in that** the amplitude of the variations of the said first signal is obtained by computing the difference between the maximum and the minimum of the variations of the said first signal during the duration (T) of the time window.

11. Device according to any one of Claims 5 to 10, **characterized in that** the second sub-system (S2) is activated with a delay ($\tau$) with respect to the instant ($T_0$) at which the said first threshold is crossed.

FIG.1

Sonde 2 = 3°

Sonde 3 = 3.1°

Sonde 1 = 8°

FIG.2A

Sonde 2 = 3°

Sonde 3 = 8.1°

Sonde 1 = 8°

FIG.2B

$S_{Nz}$ → Analyse et mesure de l'amplitude de $S_{Nz}$ — E1

$Pc$ → Comparaison par rapport au seuil de variation en Nz — E2

— $P_1$

$S_\alpha$ → Analyse et mesure de l'amplitude de $S_\alpha$ — E3

Comparaison par rapport au seuil de fonctionnement et décision — E4

— $P_2$

FIG.3

FIG.4

**EP 2 642 302 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1354212 B1
- EP 1354212 A